# EUROPÄISCHE PATENTSCHRIFT

(11) **EP 3 697 520 B1**
(45) Veröffentlichungstag und Bekanntmachung des Hinweises auf die Patenterteilung: **08.12.2021**
(21) Anmeldenummer: 18785595.2
(22) Anmeldetag: 10.10.2018
(51) Int. Cl.: B01D 53/14, C10L 3/10, B01D 53/26

(54) **GLYKOLTROCKNUNGSANLAGE UND VERFAHREN ZUR GLYKOLTROCKNUNG**
GLYCOL DRYING SYSTEM AND METHOD FOR DRYING GLYCOL
INSTALLATION DE SÉCHAGE DE GLYCOL ET PROCÉDÉ DE SÉCHAGE DE GLYCOL

(30) Priorität: 16.10.2017 DE 102017124002
(43) Veröffentlichungstag der Anmeldung: 26.08.2020
(73) Patentinhaber: RWE Gas Storage West GmbH, 45127 Essen (DE)
(72) Erfinder: NEUHAUS, Guido, 48249 Dülmen (DE); LENTH, Burkhard, 44575 Castrop-Rauxel (DE)
(74) Vertreter: Cohausz & Florack
(86) Internationale Anmeldenummer: PCT/EP2018/077549
(87) Internationale Veröffentlichungsnummer: WO 2019/076694

(56) Entgegenhaltungen:
- DE-A1- 19 808 291
- DE-A1- 19 963 305
- FR-A1- 2 819 426
- US-A1- 2004 206 242
- US-A1- 2005 022 665
- US-A1- 2007 209 512
- US-A1- 2015 128 802

## Beschreibung

Die Erfindung betrifft eine Glykoltrocknungsanlage mit wenigstens einem Nassglykolsammelbehälter und/oder wenigstens einer Glykolsammelleitung zum Sammeln von feuchtem Glykol, mit wenigstens einer Heizeinrichtung zum Aufheizen des feuchten Glykols im wenigstens einem Nassglykolsammelbehälter und/oder in der wenigstens einen Glykolsammelleitung, und mit einer Membrantrennanlage zum Abtrennen des Wassers aus dem aufgeheizten, feuchten Glykol. Ferner betrifft die Erfindung eine Gastrocknungsanlage, insbesondere Erdgastrocknungsanlage, mit wenigstens einem mit Glykol als Absorbens betriebenen Absorber, insbesondere mit wenigstens einem mit Glykol als Waschmedium betriebenen Gaswäscher, zum Absorbieren im Gas enthaltener Feuchtigkeit im Glykol und mit einer Glykoltrocknungsanlage zum Entfernen der Feuchtigkeit aus dem Glykol. Zusätzlich betrifft die Erfindung noch ein Verfahren zur Trocknung von Glykol und ein Verfahren zum Trocknen von Gas.

Zur Trocknung von Gas, insbesondere von Erdgas, wird Glykol eingesetzt. So nimmt Erdgas beispielsweise bei der Speicherung in unterirdischen Speichern Feuchtigkeit in Form von Wasser auf, das nach der Entnahme des Erdgases aus dem Untergrundspeicher wieder entfernt werden muss, etwa um Kondensation in den Transportleitungen zu vermeiden. Zur Trocknung wird das Erdgas typischerweise mit Triethylenglykol (TEG) gewaschen, das bei der Gaswäsche die im Erdgas zugeführte Feuchtigkeit absorbiert. Mithin fungiert Glykol als Absorbens zur Aufnahme von Wasser. Bei der Gaswäsche nimmt das Triethylenglykol (TEG) üblicherweise zwischen 0,5 Massen-% und 2 Massen-% Wasser auf. Damit das Glykol wiederverwendet werden kann, wird das Glykol nach der Gaswäsche getrocknet.

Dies erfolgt in vielen Anlagen im Wege der Destillation, wozu das Glykol auf 190°C bis 205 °C erhitzt werden muss. Durch diese hohe Temperatur kommt es zur thermischen Zersetzung des Triethylenglykol (TEG). Es muss daher regelmäßig ausgetauscht werden, was die Betriebskosten ansteigen lässt. Das Erhitzen des Glykols erfolgt in einem Kessel, der mit heißen Rauchgasen aus der Verbrennung von Erdgas in einem Gasbrenner beheizt wird. Die hohen Rauchgastemperaturen erfordern aus genehmigungsrechtlicher und/oder ökologischer Sicht eine immer aufwendigere und kostenintensivere Rauchgasreinigung für Glykoltrocknungsanlagen. Um diesem Umstand Rechnung zu tragen, wurde die Glykoltrocknung mit einer Membrantrennanlage vorgeschlagen, was jedoch erhöhte Betriebskosten zur Folge hat. Anlagen und Verfahren des Standes der Technik sind aus DE 19808291 A1, DE 19963305 A1, FR 2 819 426 A1, US 2007/209512 A1, US 2004/206242 A1, US 2005/022665 A1 bekannt.

Daher liegt der vorliegenden Erfindung die Aufgabe zugrunde, die Glykoltrocknungsanlage, die Gastrocknungsanlage, das Verfahren zur Trocknung von Glykol und das Verfahren zur Trocknung von Gas jeweils der eingangs genannten und zuvor näher beschriebenen Art derart auszugestalten und weiterzubilden, dass die Betriebskosten gesenkt werden können, ohne unverhältnismäßige Investitionskosten in Kauf nehmen zu müssen.

Diese Aufgabe wird mit einer Glykoltrocknungsanlage gemäß Anspruch 1 gelöst.

Die genannte Aufgabe ist ferner durch eine Gastrockungsanlage nach dem Oberbegriff von Anspruch 5 dadurch gelöst, dass eine Glykoltrocknungsanlage nach einem der Ansprüche 1 bis 4 zum Entfernen der Feuchtigkeit aus dem feuchten Glykol vorgesehen ist.

Die zuvor genannte Aufgabe ist des Weiteren mit einem Verfahren gemäß Anspruch 7 gelöst.

Die eingangs genannte Aufgabe ist außerdem nach Anspruch 12 zur Trocknung von Gas, insbesondere Erdgas, gelöst,
- bei dem Feuchtigkeit aus dem Gas in wenigstens einem Absorber, insbesondere Gaswäscher, in Glykol absorbiert, insbesondere mit Glykol gewaschen, wird,
- bei dem das feuchte Glykol aus dem Absorber mit einem Verfahren nach einem der Ansprüche 7 bis 11 getrocknet wird und
- bei dem das getrocknete Glykol nach dem Abtrennen des Wassers aus dem feuchten Glykol wieder zum Absorbieren von Feuchtigkeit aus dem Gas in dem wenigstens einen Absorber eingesetzt wird.

Erfindungsmäßig ist folglich erkannt worden, dass in dem Glykol gelöstes, brennbares Flashgas zum Aufheizen des Glykols genutzt werden kann, um dass Glykol vor dem Abtrennen des Wassers in der Membrantrennanlange aufzuheizen. Das Aufheizen des Glykols vereinfacht das Abtrennen des Wassers über eine Membran in der Membrantrennanlage, da das Glykol einen höheren Siedepunkt als das Wasser aufweist. Wenn vorliegend von Glykol gesprochen wird, ist damit vorzugsweise Triethylenglykol (TEG) gemeint. Die Menge an in dem Glykol gelöstem Flashgas ist nicht ausreichend, um das Glykol zum Abtrennen des Wassers destillieren zu können. Für ein moderates Aufheizen des Glykols und ein Vereinfachen der Membrantrennung ist das im Glykol gelöste Flashgas jedoch ausreichend.

Das Aufheizen des Glykols vereinfacht aber nicht nur die Membrantrennung zum Entfernen des Wassers, sondern treibt zudem Flashgas aus dem Glykol aus, um weiteren Brennstoff für das weitere Aufheizen weiteren Glykols bereitzustellen. Um ausreichend Flashgas aus dem Glykol austreiben zu können, wird das Glykol vorzugsweise bei Umgebungsdruck oder maximal einem leichten Überdruck aufgeheizt bzw. das Flashgas bei Umgebungsdruck oder maximal einem leichten Überdruck ausgetrieben. Auf diese Weise werden die Bereitstellung und der Betrieb von Druckbehältern zur Handhabung des feuchten Glykols unter erheblichem Überdruck entbehrlich. Es kann somit sogar eine vorhandene Anlagentechnik zur Destillation des Glykols zu einem Großteil weiterverwendet werden, wenn eine Glykoldestillation erfindungsgemäß umgestellt werden soll.

Da das Flashgas zum Aufheizen des Glykols genutzt wird, ist zudem eine Verdichtung des Flashgases, beispielsweise auf einen Druck von zwischen 3 bar und 80 bar, verzichtbar.

Bevorzugt wird das feuchte Glykol in wenigstens einem Nassglykolsammelbehälter gesammelt und darin aufgeheizt. Das Flashgas wird dabei ausgetrieben und kann am Kopf des Nassglykolsammelbehälters abgezogen werden. Das grundsätzliche Prinzip der Glykoltrockung bleibt davon unberührt.

Auch für den Wärmetausch zwischen der Brennkammer zum Verbrennen des Flashgases und des nachströmenden feuchten Glykols gibt es mehrere konstruktive Möglichkeiten, von denen sich der Fachmann wenigstens einer Möglichkeit bedienen kann. Besonders bevorzugt wird ein indirekter Wärmetausch etwa über ein Wärmeträgermedium sein, um Verunreinigungen des Glykols und damit beispielsweise eines zu trocknenden Gases zu vermeiden.

Zudem ist es besonders bevorzugt, wenn die Glykoltrocknung dazu genutzt wird, ein Gas insbesondere Erdgas mittels Glykol als Absorbens, insbesondere mittels einer Glykolwäsche, zu trocknen. Die Glykoltrocknung dient dann der Regeneration des Glykols, das folglich im Glykolkreislauf gefahren und viele Male wiederverwendet werden kann.

Vorliegend werden die Glykoltrocknungsanlage, die Gastrocknunganlage, das Glykoltrocknungsverfahren und das Gastrocknungsverfahren gemeinsam beschrieben, ohne jeweils im Einzelnen zwischen den entsprechenden Anlagen und Verfahren zu unterscheiden. Für den Fachmann ergibt sich jedoch anhand des Kontextes, welche Merkmale jeweils im Hinblick auf die Anlagen und Verfahren bevorzugt sind.

Bei einer ersten besonders bevorzugten Ausgestaltung der Glykoltrocknungsanlage ist die wenigstens eine Brennkammer einer Wärmeträgeranlage zum Aufheizen des feuchten Glykols mittels indirekten Wärmetauschs mit einem Wärmeträgermedium zugeordnet. Mithin kann über die bei der Verbrennung des Flashgases in der Brennkammer freiwerdende Wärme ein Wärmeträgermedium, insbesondere ein Thermalöl oder eine andere Flüssigkeit mit einem Siedepunkt von vorzugsweise größer 100 °C, aufgeheizt werden, das die Wärme anschließend kontrolliert an das feuchte Glykol abgibt. So können beispielsweise Temperaturspitzen abgefedert und die Wärme in einem gewissen Maße gepuffert bzw. gespeichert werden. Für die Übertragung der Wärme von dem bei der Verbrennung des Flashgases gebildeten Rauchgas auf das Wärmeträgermedium kann die Wärmeträgeranlage mit dem Wärmeträgermedium in thermischem Kontakt stehende Wäremübertragerflächen aufweisen. Diese können der Einfachheit halber durch Rohre gebildet werden, die von dem Wärmeträgermedium durchströmt werden.

Erfindungsgemäß ist die wenigstens eine Brennkammer, durch die Brennkammer einer Mikrogasturbine bereitgestellt. Zur Nutzung der im Abgas der Mikrogasturbine enthaltenen Wärme ist die Mikrogasturbine zudem mit einem Abgaswärmetauscher ausgerüstet. Dabei kann der Abgaswärmetauscher so ausgebildet und in die Gesamtanlage integriert sein, dass die im Abgaswärmetauscher dem Abgas entzogene Wärme bedarfsweise über ein Wärmeträgermedium, insbesondere Thermalöl, auf das feuchte Glykol übertragen wird.

Konstruktiv und hinsichtlich der Verfahrensführung ist es besonders einfach, wenn der Flashgasabzug an dem wenigstens einen Nassglykolsammelbehälter vorgesehen ist. Um den apparativen Aufwand für einen Nassglykolsammelbehälter zu sparen, kann der Flashabzug aber beispielsweise auch an der wenigstens einen Glykolsammelleitung vorgesehen sein, und zwar alternativ oder zusätzlich. Unabhängig davon kann es zweckmäßig sein, zwei Nassglykolsammelbehälter mit jeweils einem Flashgasabzug zu versehen. Dadurch kann eine Redundanz bereitgestellt werden, die insbesondere zum abwechselnden Aufheizen des feuchten Glykols in den wenigstens zwei Nassglykolsammelbehältern genutzt werden kann. Während aus einem Nassglykolsammelbehälter feuchtes, mit Flashgas abgereichertes Glykol der Membrantrennanlage zugeführt wird, kann in deinem anderen Nassglykolsammelbehälter Glykol gesammelt und zum Austreiben des Flashgases aufgeheizt werden. Wenn das Flashgas abgezogen wurde, kann das Glykol aus diesem Nassglykolsammelbehälter in die Membrantrennanlage geleitet werden, während weiteres Glykol nun in dem anderen Nassglykolsammelbehälter zwischengespeichert wird. Das über die Membrantrennanlage getrocknete Glykol wird vorzugsweise in wenigstens einem Trockenglykolsammelbehälter gesammelt, um das getrocknete Glykol wieder zum Absorber zu führen.

Bei der Membrantrennanlage handelt es sich vorzugsweise um eine Pervaporationsmembrananlage oder Dampfpermeationsmembrananlage. Beide Begriffe werden häufig synonym verwendet. In derartigen Membrantrennverfahren wird das Permeat, hier das Wasser, dampfförmig abgezogen. Zu diesem Zweck wird auf der Permeatseite vorzugsweise ein Unterdruck erzeugt. Um den in der Membrantrennanalage erzeugten Wasserdampf zu kondensieren, kann der Membrananlage auf der Permeatseite ein Kondensator zur Kondensation des Dampfs nachgeschaltet werden.

Bei einer ersten besonders bevorzugten Ausgestaltung der Gastrocknungsanlage ist eine Glykolrückführung zum Wiederverwenden des getrockneten Glykols als Absorbens im wenigstens einen Absorber vorgesehen. Das Glykol kann somit im Kreislauf gefördert werden, was die benötigte Menge an Glykol senkt. Vorzugsweise handelt es sich dabei um einen geschlossenen Glykolkreislauf zwischen dem Absorber und der Membrantrennanlage. Zwar kann von Zeit zu Zeit das Glykol wenigstens teilweise ausgetauscht werden. Ansonsten kann die Gastrocknungsanlage aber aufgrund des schonenden Umgangs mit dem Glykol sehr lange mit demselben Glykol betrieben werden.

Bei der erfindungsgemäßen Ausgestaltung des Glykoltrocknungsverfahrens wird die bei der Verbrennung des Flashgases entstehende Wärme zum Antrieb einer Mikrogasturbine, gegebenenfalls auch zum Aufheizen eines Wärmeträgermediums, insbesondere eines Thermalöls, genutzt. Das aufgeheizte Wärmeträgermedium kann anschließend seine Wärme an das feuchte Glykol abgeben. Da das Flashgas zum Betrieb einer Mikrogasturbine genutzt wird, kann nicht nur die frei werdende Wärme genutzt, sondern auch die Welle der Mikrogasturbine gedreht werden, etwa um einen Generator oder eine andere Vorrichtung anzutreiben. Die Wärme der Mikrogasturbine, insbesondere des Abgases aus der Mikrogasturbine, kann beispielsweise durch einen Abgaswärmetauscher genutzt werden, etwa zum Aufheizen eines Wärmeträgermediums. Mithin ist es besonders bevorzugt, wenn das Wärmeträgermedium, insbesondere das Thermalöl, zum indirekten Aufheizen des feuchten Glykols genutzt wird. Die Abgaswärme der Mikrogasturbine wird erfindungsgemäß zum indirekten Aufheizen des feuchten Glykols genutzt.

Für das Abtrennen der Feuchtigkeit aus dem feuchten Glykol und das Austreiben des gelösten Flashgases aus dem feuchten Glykol bietet es sich an, das feuchte Glykol aufzuheizen, wobei für einen besonders effizienten Betrieb der Glykoltrocknungsanlage die maximale Temperatur des aufgeheizten feuchten Glykols weniger als 300°C, vorzugsweise weniger als 200°C, insbesondere weniger als 150°C beträgt. Geringere Temperaturen des feuchten Glykols sind dabei insoweit bevorzugt, als dass diese für eine effektive Membrantrennung ausreichen und zudem die Menge an ausgetriebenem Flashgas ausreicht, um das feuchte Glykol ohne weitere Wärmezufuhr auf die gewünschte Zieltemperatur aufzuheizen. Gleichwohl sollte die Temperatur des feuchten Glykols auch nicht zu gering sein, so dass grundsätzlich Temperaturen von wenigstens 100°C bevorzugt sein werden. Dabei hat sich 110°C bis 130°C als besonders bevorzugter Temperaturbereich für das feuchte Glykol erwiesen.

Alternativ oder zusätzlich bietet es sich an, wenn das Flashgas bei einem absoluten Druck von weniger als 5 bar, vorzugsweise weniger als 3 bar, insbesondere weniger als 2 bar aus dem feuchten Glykol ausgetrieben wird. Ein geringerer Druck verringert den anlagentechnischen Aufwand ebenso wie den Betrieb der Anlage. Außerdem wird das Ausgasen des Flashgases begünstigt. Gleichwohl ist ein höherer Druck für das Abscheiden des Wassers in der Membrantrennanlage zweckmäßig. Mithin kann der Druck des feuchten Glykols nach dem Abziehen des Flashgases und vor der Membranfiltration angehoben werden.

Für ein einfaches und zuverlässiges Aufheizen des feuchten Glykols und Ausgasens des Flashgases bietet es sich an, wenn das feuchte Glykol abwechselnd nacheinander in wenigstens zwei unterschiedlichen Nassglykolsammelbehältern gesammelt und/oder aufgeheizt wird. So kann beispielsweise in einem Nassglykolsammelbehälter entgastes, also mit Flashgas abgereichertes, feuchtes Glykol bereitgehalten werden, um es der Membrantrennanlage zuzuleiten, während in wenigstens einem anderen Nassglykolsammelbehälter feuchtes Glykol zwischengespeichert, entgast und/oder aufgeheizt wird. Mithin kann das Flashgas abwechselnd nacheinander aus dem feuchten Glykol in wenigstens zwei unterschiedlichen Nassglykolsammelbehältern ausgetrieben und/oder aus wenigstens zwei Nassglykolsammelbehältern abgezogen werden.

Besonders effektiv kann das Wasser von dem feuchten Glykol durch Pervaporation oder Dampfpermeation abgetrennt werden. Dies gilt insbesondere deshalb, weil das Glykol typischerweise nur einen geringen Feuchtegehalt aufweist. Darüber hinaus ist es zweckmäßig, und zwar insbesondere im Zusammenhang mit der Pervaporation oder Dampfpermeation des feuchten Glykols, wenn das abgetrennte Wasser nachträglich kondensiert wird. Hierzu kann wenigstens ein Kondensator an sich bekannter Bauart verwendet werden.

Bei einer ersten besonders bevorzugten Ausgestaltung des Gastrocknungsverfahrens wird das Glykol zwischen dem Absorber zur Aufnahme von Wasser aus dem zu trocknenden Gas einerseits und der Membrantrennanlage zum Abtrennen des aufgenommenen Wassers andererseits im Kreislauf geführt. Dieser Glykolkreislauf ist vorzugsweise bezogen auf das Glykol geschlossen, um den Bedarf an Glykol gering zu halten, auch wenn von Zeit zu Zeit das Glykol wenigstens teilweise ersetzt werden kann.

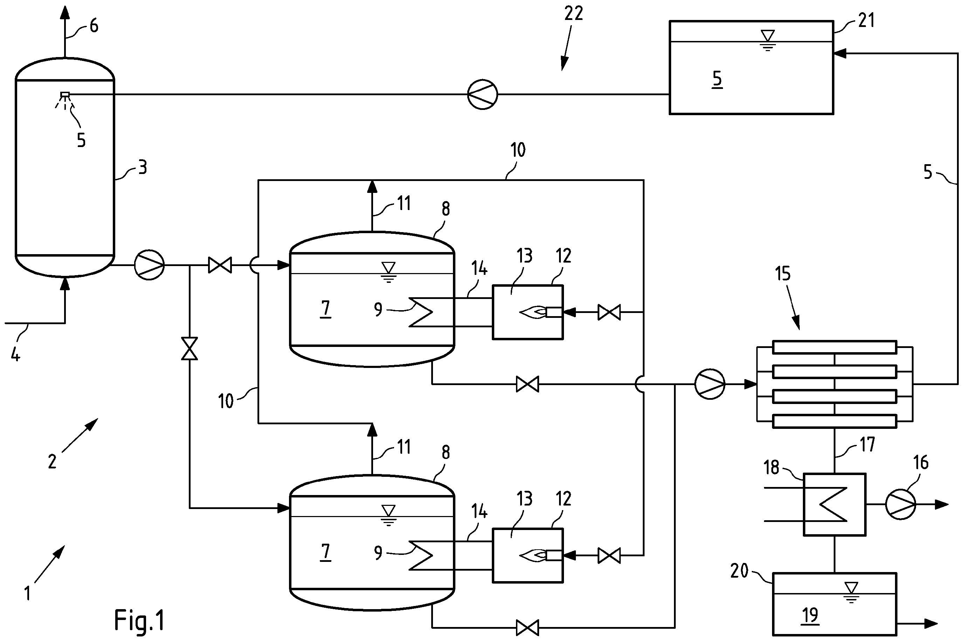

Nachfolgend wird ein Ausführungsbeispiel, das der Erfindung nicht entspricht, anhand der Figur erläutert.

In der einzigen Figur ist eine Gastrocknungsanlage 1 umfassend eine Glykoltrockungsanlage 2 dargestellt. Einem Absorber 3, der vorliegend als Wäscher ausgebildet ist, kann über eine Rohgasleitung 4 ein feuchtes Gas, insbesondere Erdgas, das beispielsweise aus einem unterirdischen Speicher entnommen worden ist, zugeführt werden. In dem Absorber 3 wird das Gas in einen innigen Kontakt mit Glykol 5, insbesondere Triethylenglykol (TEG), gebracht, wodurch die Feuchtigkeit des Gases von dem Glykol 5 aufgenommen, mithin absorbiert, wird. In dem dargestellten und insoweit bevorzugten Absorber 3 wird Glykol 5 fein verteil in das durch den Absorber 3 strömende Gas gesprüht. Das getrocknete Gas verlässt den dargestellten Absorber an dessen Kopf über eine Reingasleitung 6.

Nicht dargestellt ist, dass dem Absorber ein Absorberkreislauf zugeordnet sein kann. Über eine Pumpe des Absorberkreislaufs wird Glykol aus dem Sumpf des Absorbers 3 abgezogen und erneut über Düsen im Absorber 3 versprüht. Aus diesem Absorberkreislauf bzw. aus dem Sumpf kann ein Teil des Glykols als dann feuchtes Glykol 7 abgezogen werden, um das feuchte Glykol 7 zu trocknen. Es kann aber auch auf einen entsprechenden Absorberkreislauf verzichtet und das feuchte Glykol 7 direkt aus dem Sumpf des Absorbers 3 der Glykoltrocknungsanlage 2 zugeführt werden, ohne erneut im Absorber 3 versprüht zu werden.

Die dargestellte und insoweit bevorzugte Glykoltrocknungsanlage 2 weist zwei Nassglykolsammelbehälter 8 auf, in denen das feuchte Glykol 7 aus dem Absorber 3 abwechselnd gesammelt wird. Während das feuchte Glykol 7 in einem Nassglykolsammelbehälter 8 zwischengespeichert wird, wird das feuchte Glykol 7 über einen Wärmetauscher 9 aufgeheizt, und zwar vorliegend etwa auf eine Temperatur von 120°C. Der Druck im Nassglykolsammelbehälter 8 entspricht dabei bedarfsweise etwa dem Umgebungsdruck und beträgt vorliegend weniger als 1,5 bar absolut. Dabei entweicht Flashgas 10 aus dem feuchten Glykol 7, bei dem es sich vorliegend um im Absorber 3 im feuchten Glykol 7 gelöstes Erdgas handelt. Das Flashgas 10 wird am Kopf des entsprechenden Nassglykolsammelbehälters 8 über einen Flashgasabzug 11 abgezogen und einer Heizeinrichtung 12 in Form einer Thermalölanlage zugeführt. In der als Thermalölanlage ausgebildeten Heizeinrichtung 12 wird das Flashgas 10 in einer Brennkammer 13 verbrannt und heizt dabei ein Thermalöl 14 auf, das seine Wärme anschließend über den Wärmetauscher 9 im Nassglykolsammelbehälter 8 an das feuchte Glykol 7 abgibt. Wenn der Nassglykolsammelbehälter 8 gefüllt und das feuchte Glykol 7 einerseits aufgeheizt und andererseits entgast ist, wird weiteres feuchtes Glykol 7 aus dem Absorber 3 in den anderen Nassglykolsammelbehälter 8 geleitet, in dem das feuchte Glykol 7 wie beschrieben aufgeheizt und entgast wird. Auch das dabei entstehende Flashgas 10 wird am Kopf des Nassglykolsammelbehälters 8 über einen Flashgasabzug 11 abgezogen und einer Heizeinrichtung 12 zum Erwärmen eines Nassglykolsammelbehälters 8 zugeführt. Vorliegend ist jedem Nassglykolsammelbehälter 8 eine Heizeinrichtung 12 in Form einer Thermalölanlage zugeordnet, um eine entsprechende Redundanz zu erzeugen. Grundsätzlich könnte aber auch eine einzige Heizeinrichtung 12 ausreichend sein.

Aus dem jeweils mit aufgeheiztem und entgastem Glykol 7 gefüllten Nassglykolsammelbehälter 8 wird das feuchte Glykol 7 einer Membrantrennanlage 15 zugeführt, in der bei der dargestellten und insoweit bevorzugten Glykoltrocknungsanlage 2 auf der Permeatseite mit der Vakuumpumpe 16 ein Unterdruck gezogen wird. Die Feuchtigkeit des feuchten Glykols 7 passiert die Membran und wird nach dem Durchtritt durch die Membran, vorzugsweise organische Membran, etwa auf Basis von Zellulose, auf der Permeatseite dampfförmig abgeführt. Daher wird das Verfahren auch als Pervaporation oder auch Dampfpermeation bezeichnet. Der in der Membrantrennanlage 15 anfallende Wasserdampf 17 wird in einem nachgeschalteten Kondensator 18 zu wenigstens im Wesentlichen reinem Wasser 19 kondensiert, das in einem Vorlagebehälter 20 zwischengespeichert wird und das dementsprechend in anderen Prozessen verwendet werden kann.

Das Retentat aus der Membrantrennanlage 15 fällt als getrocknetes Gykol 5 an, wobei noch ein Restfeuchtegehalt im getrockneten Glykol 5 vorhanden sein kann. Das getrocknete Glykol 5 wird in einem Trockenglykolsammelbehälter 21 zwischengespeichert und von dort erneut dem Absorber 3 zum Auswaschen von Feuchtigkeit aus dem den Absorber 3 passierendem Gas zugeleitet. Das Glykol 5,7 wird daher in der Gastrockungsanlage in einem geschlossenen Glykolkreislauf 22 zwischen dem Absorber 3, den Nassglykolsammelbehältern 8 und der Membrantrennanlage 15 sowie bedarfsweise aus dem Trockenglykolsammelbehälter 21 geführt, wobei bedarfsweise aber von Zeit zu Zeit ein Austausch von Glykol 5,7 möglich ist

### Bezugszeichenliste

- 1: Gastrocknungsanlage
- 2: Glykoltrocknungsanlage
- 3: Absorber
- 4: Rohgasleitung
- 5: trockenes Glykol
- 6: Reingasleitung
- 7: feuchtes Glykol
- 8: Nassglykolsammelbehälter
- 9: Wärmetauscher
- 10: Flashgas
- 11: Flashgasabzug
- 12: Heizeinrichtung
- 13: Brennkammer
- 14: Thermalöl
- 15: Membrantrennanlage
- 16: Vakuumpumpe
- 17: Wasserdampf
- 18: Kondensator
- 19: Wasser
- 20: Vorlagebehälter
- 21: Trockenglykolsammelbehälter
- 22: Glykolkreislauf

## Patentansprüche

1. Glykoltrocknungsanlage (2) mit wenigstens einem Nassglykolsammelbehälter (8) und/oder wenigstens einer Glykolsammelleitung zum Sammeln von feuchtem Glykol (7), mit wenigstens einer Heizeinrichtung (12) zum Aufheizen des feuchten Glykols (7) im wenigstens einen Nassglykolsammelbehälter (8) und/oder in der wenigstens einen Glykolsammelleitung,
**dadurch gekennzeichnet, dass** eine Membrantrennanlage (15) zum Abtrennen des Wassers (19) aus dem aufgeheizten, feuchten Glykol (7) vorgesehen ist, dass wenigstens ein Flashgasabzug (11) zum Abziehen von beim Aufheizen des feuchten Glykols (7) ausgetriebenen Flashgases (10) vor dem Abtrennen des Wassers (19) in der Membrantrennanlage (15) vorgesehen ist, dass wenigstens eine Brennkammer (13) zum Verbrennen des Flashgases (10) und Bereitstellen von Wärme für die Heizeinrichtung (12) vorgesehen ist, dass die Brennkammer in einer Mikrogasturbine mit Abgaswärmetauscher vorgesehen ist und dass der Abgaswärmetauscher zum Übertragen der Wärme das Abgases auf das feuchte Glykol (7) ausgebildet ist.

2. Glykoltrocknungsanlage nach Anspruch 1,
**dadurch gekennzeichnet, dass** die Brennkammer (13) einer Wärmeträgeranlage zum Aufheizen des feuchten Glykols (7) mittels indirektem Wärmetausch mit einem Wärmeträgermedium, insbesondere Thermalöl, zugeordnet ist und dass die Wärmeträgeranlage Wäremübertragerflächen zum Aufheizen des Wärmeträgermediums durch die in der Brennkammer (13) frei werdende Wärme aufweist.

3. Glykoltrocknungsanlage nach Anspruch 1 oder 2,
**dadurch gekennzeichnet, dass** der Flashgasabzug (11) an dem wenigstens einen Nassglykolsammelbehälter (8) und/oder der wenigstens einen Glykolsammelleitung vorgesehen ist und/oder dass zwei Nassglykolsammelbehälter (8), insbesondere zum wechselseitigen Aufheizen des feuchten Glykols (7), mit jeweils einem Flashgasabzug (11) vorgesehen sind.

4. Glykoltrocknungsanlage nach einem der Ansprüche 1 bis 3,
**dadurch gekennzeichnet, dass** die Membrantrennanlage (15) eine Pervaporationsmembrananlage oder Dampfpermeationsmembrananlage ist und dass, vorzugsweise, ein Kondensator (18) zur Kondensation des in der Membrantrennanlage (15) abgetrennten Wassers (19) vorgesehen ist.

5. Gastrocknungsanlage (1), insbesondere Erdgastrocknungsanlage, mit wenigstens einem mit Glykol (5) als Absorbens betriebenen Absorber (3), insbesondere mit wenigstens einem mit Glykol (5) als Waschmedium betriebenen Gaswäscher, zum Absorbieren im Gas enthaltener Feuchtigkeit im Glykol (5), **dadurch gekennzeichnet, dass** eine Glykoltrocknungsanlage (2) nach einem der Ansprüche 1 bis 4 zum Entfernen der Feuchtigkeit aus dem feuchten Glykol (7) vorgesehen ist.

6. Gastrocknungsanlage nach Anspruch 5,
**dadurch gekennzeichnet, dass** eine Glykolrückführung zum Widerverwenden des getrockneten Glykols (5) als Absorbens im wenigstens einen Absorber (3) vorgesehen ist und dass, vorzugsweise, ein geschlossener Glykolkreislauf (22) zwischen dem Absorber (3) und der Membrantrennanlage (15) vorgesehen ist.

7. Verfahren zur Trocknung von Glykol (7),
- bei dem feuchtes Glykol (7) aufgeheizt wird,
- bei dem beim Aufheizen des Glykols (7) Flashgas (10) ausgetrieben wird,
- bei dem das ausgetriebene Flashgas (10) abgezogen wird,
- bei dem das abgezogene Flashgas (10) verbrannt wird,
- bei dem die bei der Verbrennung des Flashgases (10) entstehende Wärme zum Aufheizen von feuchtem Glykol (7) und zum Austreiben von Flashgas (10) genutzt wird und
- bei dem nach dem Aufheizen und dem Abziehen von Flashgas (10) in einer Membrantrennanlage (15) Wasser (19) aus dem feuchten Glykol (7) abgetrennt wird
- bei dem die bei der Verbrennung des Flashgases (10) entstehende Wärme zum Antrieb einer Mikrogasturbine genutzt wird und
- bei dem die Abgaswärme der Mikrogasturbine zum indirekten Aufheizen des feuchten Glykols (7) genutzt wird.

8. Verfahren nach Anspruch 7,
- bei dem die bei der Verbrennung des Flashgases (10) entstehende Wärme zum Aufheizen eines Wärmeträgermediums, insbesondere Thermalöls genutzt wird und
- bei dem das Thermalöl zum indirekten Aufheizen des feuchten Glykols (7) genutzt wird.

9. Verfahren nach Anspruch 7 oder 8,
- bei dem das feuchte Glykol (7) auf eine Temperatur von weniger als 300°C, vorzugsweise weniger als 200°C, insbesondere weniger als 150°C aufgeheizt wird und/oder
- bei dem das Flashgas (10) bei einem absoluten Druck von weniger als 5 bar, vorzugsweise weniger als 3 bar, insbesondere weniger als 2 bar aus dem feuchten Glykol (7) ausgetrieben wird.

10. Verfahren nach einem der Ansprüche 7 bis 9,
- bei dem feuchtes Glykol (7) abwechselnd nacheinander in wenigstens zwei Nassglykolsammelbehältern (8) gesammelt und/oder aufgeheizt wird und/oder
- bei dem Flashgas (10) abwechselnd nacheinander aus dem feuchten Glykol (7) in wenigstens zwei Nassglykolsammelbehältern (8) ausgetrieben und/oder aus wenigstens zwei Nassglykolsammelbehältern (8) abgezogen wird.

11. Verfahren nach einem der Ansprüche 7 bis 10,
- bei dem das Wasser (19) von dem feuchten Glykol (7) durch Pervaporation oder Dampfpermeation abgetrennt wird und
- bei dem, vorzugsweise, das abgetrennte Wasser (19) nachträglich kondensiert wird.

12. Verfahren zur Trocknung von Gas, insbesondere Erdgas,
- bei dem Feuchtigkeit aus dem Gas in wenigstens einem Absorber (3), insbesondere Gaswäscher, in Glykol (5) absorbiert, insbesondere mit Glykol (5) gewaschen, wird,
- bei dem das feuchte Glykol (7) aus dem Absorber (3) mit einem Verfahren nach einem der Ansprüche 7 bis 11 getrocknet wird und
- bei dem das getrocknete Glykol (5) nach dem Abtrennen des Wassers (19) aus dem feuchten Glykol (7) wieder zum Absorbieren von Feuchtigkeit aus dem Gas in dem wenigstens einen Absorber (3) eingesetzt wird.

13. Verfahren nach Anspruch 12,
- bei dem das Glykol (5,7) zwischen dem Absorber (3) zur Aufnahme von Wasser durch das Glykol (5) einerseits und der Membrantrennanlage (15) zum Abtrennen des aufgenommenen Wassers (19) aus dem feuchten Glykol (7) andererseits in einem Glykolkreislauf (22) geführt wird.

## Claims

1. Glycol drying system (2) with at least one wet glycol collection container (8) and/or at least one glycol collection line to collect moist glycol (7), with at least one heating device (12) to heat the moist glycol (7) in the at least one wet glycol collection container (8) and/or in the at least one glycol collection line, **characterised in that** a membrane separation system (15) is provided to separate the water (19) from the heated, moist glycol (7), **in that** at least one flash gas vent (11) is provided to remove flash gas (10) driven out when the moist glycol (7) is heated before separating the water (19) in the membrane separation system (15), **in that** at least one combustion chamber (13) is provided to combust the flash gas (10) and provide heat for the heating device (12), **in that** the combustion chamber is provided in a micro gas turbine with exhaust gas heat exchanger and **in that** the exhaust gas heat exchanger is formed to transfer the heat of the exhaust gas to the moist glycol (7).

2. Glycol drying system according to claim 1, **characterised in that** the combustion chamber (13) is assigned to a heat carrier system to heat the moist glycol (7) by means of indirect heat exchange with a heat carrier medium, in particular thermal oil and **in that** the heat carrier system has heat transfer surfaces to heat the heat carrier medium through the heat released in the combustion chamber (13).

3. Glycol drying system according to claim 1 or 2, **characterised in that** the flash gas vent (11) is provided on the at least one wet glycol collection container (8) and/or the at least one glycol collection line and/or **in that** two wet glycol collection containers (8), in particular for mutually heating the wet glycol (7), are provided with in each case one flash gas vent (11).

4. Glycol drying system according to any one of claims 1 to 3, **characterised in that** the membrane separation system (15) is a pervaporation membrane system or vapour permeation membrane system and **in that** preferably a condenser (18) is provided to condense the water (19) separated in the membrane separation system (15).

5. Gas drying system (1), in particular natural gas drying system, with at least one absorber (3) operated with glycol (5) as the absorbent, in particular with at least one gas scrubber operated with glycol (5) as the scrubbing medium, to absorb moisture, contained in the gas, in the glycol (5), **characterised in that** a glycol drying system (2) according to any one of claims 1 to 4 is provided to remove the moisture from the moist glycol (7).

6. Gas drying system according to claim 5, **characterised in that** a glycol return system is provided to reuse the dried glycol (5) as the absorbent in the at least one absorber (3) and **in that** preferably a closed glycol circuit (22) is provided between the absorber (3) and the membrane separation system (15).

7. Method for drying glycol (7),
- in the case of which moist glycol (7) is heated,
- in the case of which flash gas (10) is driven out when the glycol (7) is heated,
- in the case of which the flash gas (10) driven out is removed,
- in the case of which the removed flash gas (10) is combusted,
- in the case of which the heat resulting when the flash gas (10) is combusted is used to heat moist glycol (7) and to drive out flash gas (10) and
- in the case of which water (19) from the moist glycol (7) is separated in a membrane separation system (15) after heating and removing flash gas (10)
- in the case of which the heat resulting when the flash gas (10) is combusted is used to drive a micro gas turbine and
- in the case of which the exhaust gas heat of the micro gas turbine is used to indirectly heat the moist glycol (7).

8. Method according to claim 7,
- in the case of which the heat resulting when the flash gas (10) is combusted is used to heat a heat carrier medium, in particular thermal oil and
- in the case of which the thermal oil is used to indirectly heat the moist glycol (7).

9. Method according to claim 7 or 8,
- in the case of which the moist glycol (7) is heated to a temperature of less than 300°C, preferably less than 200°C, in particular less than 150°C and/or
- in the case of which the flash gas (10) is driven out of the moist glycol (7) at an absolute pressure of less than 5 bar, preferably less than 3 bar, in particular less than 2 bar.

10. Method according to any one of claims 7 to 9,
- in the case of which moist glycol (7) is collected and/or heated alternately and successively in at least two wet glycol collection containers (8) and/or
- in the case of which flash gas (10) is driven out alternately and successively from the moist glycol (7) in at least two wet glycol collection containers (8) and/or is removed from at least two wet glycol collection containers (8).

11. Method according to any one of claims 7 to 10,
- in the case of which the water (19) is separated from the moist glycol (7) by pervaporation or vapour permeation and
- in the case of which preferably the separated water (19) is subsequently condensed.

12. Method for drying gas, in particular natural gas,
- in the case of which moisture from the gas is absorbed in at least one absorber (3), in particular a gas scrubber, in glycol (5), in particular scrubbed with glycol (5),
- in the case of which the moist glycol (7) from the absorber (3) is dried with a method according to any one of claims 7 to 11 and
- in the case of which the dried glycol (5), after separating the water (19) from the moist glycol (7), is reused to absorb moisture from the gas in the at least one absorber (3).

13. Method according to claim 12,
- in the case of which the glycol (5, 7) is guided in a glycol circuit (22) between the absorber (3) to absorb water through the glycol (5), on the one hand, and the membrane separation system (15) to separate the absorbed water (19) from the moist glycol (7), on the other hand.

## Revendications

1. Installation de séchage de glycol (2) comprenant au moins un contenant de collecte de glycol humide (8) et/ou au moins un conduit de collecte de glycol servant à collecter du glycol (7) humide, avec au moins un dispositif de chauffage (12) servant à réchauffer le glycol (7) humide dans au moins un contenant de collecte de glycol humide (8) et/ou dans au moins un conduit de collecte de glycol, **caractérisée en ce que** l'on prévoit une installation de séparation à membrane (15) servant à séparer de l'eau (19) du glycol (7) humide réchauffé, **en ce que** l'on prévoit au moins une hotte d'extraction de flash gaz (11) dans l'installation de séparation à membrane (15) pour extraire, avant la séparation de l'eau (19), du flash gaz (10) libéré lors du réchauffage du glycol (7) humide, et **en ce que** l'on prévoit au moins une chambre de combustion (13) pour faire brûler le flash gaz (10) et fournir de la chaleur pour le dispositif de chauffage (12), **en ce que** l'on prévoit la chambre de combustion dans une micro-turbine à gaz avec un échangeur thermique pour gaz d'échappement et **en ce que** l'échangeur thermique pour gaz d'échappement est conçu pour transmettre la chaleur du gaz d'échappement au glycol (7) humide.

2. Installation de séchage de glycol selon la revendication 1,
**caractérisée en ce que** la chambre de combustion (13) est associée à une installation de caloporteurs pour réchauffer le glycol (7) humide par un échange thermique indirect avec un fluide caloporteur, notamment de l'huile thermique, et **en ce que** l'installation de caloporteurs présente des surfaces d'échangeur thermique pour réchauffer le fluide caloporteur grâce à la chaleur induite dans la chambre de combustion (13).

3. Installation de séchage de glycol selon l'une des revendications 1 à 2,
**caractérisée en ce que** la hotte d'extraction de flash gaz (11) est prévue sur au moins un contenant de collecte de glycol humide (8) et/ou sur au moins un conduit collecteur de glycol et/ou **en ce que** deux contenants de collecte de glycol humide (8), notamment pour réchauffer réciproquement le glycol (7) humide, sont pourvus respectivement d'une hotte d'extraction de flash gaz (11).

4. Installation de séchage de glycol selon l'une des revendications 1 à 3, **caractérisée en ce que** l'installation de séparation à membrane (15) est une installation à membrane de pervaporation ou une installation à membrane de perméation de vapeur et **en ce que**, de préférence, l'on prévoit un condenseur (18) pour condenser l'eau (19) séparée dans l'installation de séparation à membrane (15).

5. Installation de séchage de gaz (1), notamment une installation de séchage de gaz naturel, avec au moins un absorbeur (3) fonctionnant avec du glycol (5) comme absorbant, notamment avec au moins un laveur de gaz fonctionnant avec du glycol (5) comme fluide de lavage, pour absorber dans le glycol (5) l'humidité contenue dans le gaz, **caractérisée en ce que** l'on prévoit une installation de séchage de glycol (2) selon l'une des revendications 1 à 4 pour ôter l'humidité du glycol (7) humide.

6. Installation de séchage de gaz selon la revendication 5,
**caractérisée en ce que** l'on prévoit une recirculation de glycol pour réutiliser le glycol (5) séché comme absorbant dans au moins un absorbeur (3) et **en ce que** l'on prévoit, de préférence, un circuit de glycol (22) fermé entre l'absorbeur (3) et l'installation de séparation à membrane (15).

7. Procédé de séchage de glycol (7),
- dans lequel le glycol (7) humide est réchauffé,
- dans lequel lors du réchauffement du glycol (7) du flash gaz (10) est expulsé,
- dans lequel le flash gaz (10) expulsé est déchargé,
- dans lequel le flash gaz (10) déchargé est brûlé,
- dans lequel la chaleur générée lors de la combustion du flash gaz (10) est utilisée pour réchauffer le glycol (7) humide et pour expulser le flash gaz (10) et
- dans lequel de l'eau (19) est séparée du glycol (7) humide après le réchauffement et le déchargement de flash gaz (10) dans une installation de séparation à membrane (15),
- dans lequel la chaleur générée par la combustion du flash gaz (10) est utilisée pour entraîner une micro-turbine à gaz et
- dans lequel la chaleur des gaz d'échappement de la micro-turbine à gaz est utilisée pour réchauffer indirectement le glycol (7) humide.

8. Procédé selon la revendication 7,
- dans lequel la chaleur générée lors de la combustion de flash gaz (10) est utilisée pour réchauffer un fluide caloporteur, notamment de l'huile thermique et
- dans lequel l'huile thermique est utilisée pour réchauffer indirectement le glycol (7) humide.

9. Procédé selon la revendication 7 ou 8,
- dans lequel le glycol (7) humide est réchauffé à une température inférieure à 300 °C, de préférence inférieure à 200 °C, notamment inférieure à 150 °C et/ou
- dans lequel le flash gaz (10) est expulsé hors du glycol (7) humide sous une pression absolue inférieure à 5 bars, de préférence inférieure à 3 bars, notamment inférieure à 2 bars.

10. Procédé selon l'une des revendications 7 à 9,
- dans lequel le glycol (7) humide est collecté et/ou réchauffé alternativement tour à tour dans au moins deux contenants de collecte de glycol humide (8) et/ou
- dans lequel le flash gaz (10) est expulsé alternativement tour à tour hors du glycol (7) humide dans au moins deux contenants de collecte de glycol humide (8) et/ou est déchargé hors d'au moins deux contenants de collecte de glycol humide (8).

11. Procédé selon l'une des revendications 7 à 10,
- dans lequel l'eau (19) est séparée du glycol (7) humide par pervaporation ou perméation de vapeur et
- dans lequel, de préférence, l'eau (19) séparée est ensuite condensée.

12. Procédé de séchage de gaz, notamment de gaz naturel,
- dans lequel l'humidité du gaz est absorbée dans au moins un absorbeur (3), notamment un laveur de gaz, dans le glycol (5), notamment est lavée avec du glycol (5),
- dans lequel le glycol (7) humide en provenance de l'absorbeur (3) est séché conformément à un procédé selon l'une des revendications 7 à 11 et
- dans lequel le glycol (5) séché, après avoir séparé l'eau (19) du glycol (7) humide, est réutilisé pour absorber l'humidité du gaz dans au moins un absorbeur (3).

13. Procédé selon la revendication 12,
- dans lequel le glycol (5,7) entre l'absorbeur (3) pour l'absorption de l'eau par le glycol (5) d'une part et l'installation de séparation à membrane (15) pour la séparation de l'eau (19) absorbée du glycol (7) humide d'autre part est conduit dans un circuit de glycol (22).
